# EUROPEAN PATENT APPLICATION

(11) **EP 4 406 933 A1**
(43) Date of publication of application: **31.07.2024**
(21) Application number: 22892586.3
(22) Date of filing: 26.10.2022
(51) Int. Cl.: C07C 31/04, B01D 53/14, B01D 53/62, B01D 53/96, C01B 32/50

(54) **CARBON DIOXIDE RECOVERY SYSTEM**

(30) Priority: 12.11.2021 JP 2021184701
(71) Applicant: Mitsubishi Heavy Industries, Ltd., Tokyo 100-8332 (JP)
(72) Inventor: TACHIBANA, Shinya, Yokohama-shi, Kanagawa 220-8401 (JP); KATSUME, Tadashi, Yokohama-shi, Kanagawa 220-8401 (JP); YOSHIDA, Kaori, Yokohama-shi, Kanagawa 220-8401 (JP); YONEKAWA, Takahito, Yokohama-shi, Kanagawa 220-8401 (JP)
(74) Representative: Studio Torta S.p.A.
(86) International application number: PCT/JP2022/039817
(87) International publication number: WO 2023/085086

(57) **Abstract**

A carbon dioxide recovery system is equipped with: a first distillation column for heating an absorption liquid that has absorbed carbon dioxide to release carbon dioxide from the absorption liquid; a first reboiler for exchanging heat between the absorption liquid extracted from the first distillation column and steam; a second reboiler for exchanging heat between the absorption liquid extracted from the first distillation column and a fluid different from both an effluent gas from the first distillation column and the steam; and a first compressor for compressing the fluid before the fluid flows into the second reboiler.

## Description

### TECHNICAL FIELD

The present disclosure relates to a carbon dioxide recovery system.

The present application claims priority based on Japanese Patent Application No. 2021-184701 filed on November 12, 2021, the entire content of which is incorporated herein by reference.

### BACKGROUND ART

Patent Document 1 describes a carbon dioxide recovery system equipped with an absorption column in which carbon dioxide is absorbed into an absorption liquid by bringing gas containing carbon dioxide into gas-liquid contact with the absorption liquid, and a distillation column in which carbon dioxide is released from the absorption liquid that has absorbed carbon dioxide in the absorption tower. This distillation column is provided with a reboiler for heating the absorption liquid in the distillation column. Multiple reboilers may be provided, for example, a reboiler for heating the absorption liquid by heat exchange between the absorption liquid and steam, and a reboiler for heating the absorption liquid by heat exchange between the absorption liquid and steam flowing out of the distillation column and then pressurized by a compressor. With this configuration, not only steam but also heat of steam flowing out of the top of the distillation column and then compressed by a compressor is used as a heat source to heat the absorption liquid, so that the amount of steam used is reduced, and the amount of external heat supply can be reduced.

### Citation List

### Patent Literature

Patent Document 1: JP6064771B

### SUMMARY

### Problems to be Solved

However, since carbon dioxide recovery systems are usually installed as part of a producing plant of any substance, power generation plant, or the like, it is conceivable that there may be a more suitable heat source for heating the absorption liquid in the distillation column, and if such a suitable heat source is used, the amount of external heat supply could be further reduced.

In view of the above, an object of at least one embodiment of the present disclosure is to provide a carbon dioxide recovery system with a reduced amount of external heat supply to the distillation column for releasing carbon dioxide from an absorption liquid that has absorbed carbon dioxide.

### Solution to the Problems

In order to achieve the above-described object, a carbon dioxide recovery system according to the present disclosure is equipped with: a first distillation column for heating an absorption liquid that has absorbed carbon dioxide to release carbon dioxide from the absorption liquid; a first reboiler for exchanging heat between the absorption liquid extracted from the first distillation column and steam; a second reboiler for exchanging heat between the absorption liquid extracted from the first distillation column and a fluid different from both an effluent gas from the first distillation column and the steam; and a first compressor for compressing the fluid before the fluid flows into the second reboiler.

### Advantageous Effects

With the carbon dioxide recovery system of the present disclosure, in the first reboiler, the absorption liquid is heated by heat exchange between the absorption liquid and steam, and in the second reboiler, the absorption liquid is heated by heat exchange between the absorption liquid and a fluid different from both the effluent gas from the first distillation column and the steam after the fluid is compressed, so that the amount of steam used is reduced, and the amount of external heat supply to the first distillation column can be reduced.

### BRIEF DESCRIPTION OF DRAWINGS

FIG. 1 is a schematic configuration diagram of a carbon dioxide recovery system according to the first embodiment of the present disclosure.
FIG. 2 is a schematic configuration diagram of a carbon dioxide recovery system according to the second embodiment of the present disclosure.
FIG. 3 is a schematic configuration diagram of a carbon dioxide recovery system according to the third embodiment of the present disclosure.
FIG. 4 is a schematic configuration diagram of a carbon dioxide recovery system according to the fourth embodiment of the present disclosure.

### DETAILED DESCRIPTION

Hereinafter, a carbon dioxide recovery system according to embodiments of the present disclosure will be described with reference to the drawings. The embodiment to be described below indicates one aspect of the present disclosure, does not intend to limit the disclosure, and can optionally be modified within a range of a technical idea of the present disclosure.

### (First Embodiment)

### <Configuration of carbon dioxide recovery system according to first embodiment of present disclosure>

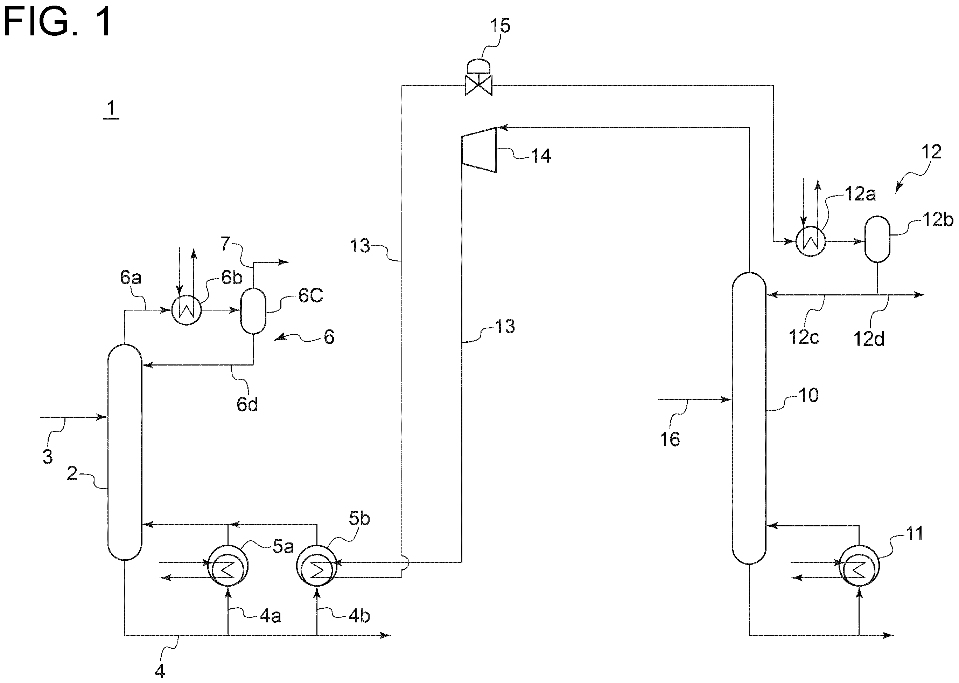

As shown in FIG. 1, a carbon dioxide recovery system 1 according to the first embodiment of the present disclosure will be described using a configuration example in which the system is provided in a methanol producing plant. The carbon dioxide recovery system 1 is equipped with a first distillation column 2 and a second distillation column 10. The first distillation column 2 communicates through an absorption liquid supply line 3 with an absorption column (not shown) for absorption of carbon dioxide into an absorption liquid by bringing gas containing carbon dioxide into gas-liquid contact with the absorption liquid, for example.

The first distillation column 2 is provided with a circulation line 4 for circulating the absorption liquid so that the absorption liquid in the first distillation column 2 is extracted from the bottom of the first distillation column 2 and returned into the first distillation column 2. The circulation line 4 includes a first line portion 4a and a second line portion 4b where the flow of the absorption liquid is divided into two parts and flows parallel to each other. The first line portion 4a and the second line portion 4b are provided with a first reboiler 5a and a second reboiler 5b, respectively. In other words, the first reboiler 5a and the second reboiler 5b are provided in parallel with each other with respect to the flow direction of the absorption liquid. The first reboiler 5a is a heat exchanger for heat exchange between the absorption liquid flowing in the first line portion 4a and steam to heat the absorption liquid. The second reboiler 5b is a heat exchanger for heat exchange between the absorption liquid flowing in the second line portion 4b and a fluid different from the steam to heat the absorption liquid. Illustrative examples of the fluid in the first embodiment will be described later.

The first distillation column 2 is also provided with a condensing device 6 which returns a condensate obtained by cooling a gas that flows out of the top of the first distillation column 2 (hereinafter referred to as "effluent gas") to the first distillation column 2. The condensing device 6 includes an effluent gas line 6a through which the effluent gas flows, a cooler 6b disposed in the effluent gas line 6a, a reflux tank 6c connected to the downstream end of the effluent gas line 6a, and a condensate line 6d through which the condensate in the reflux tank 6c is returned to the first distillation column 2. The cooler 6b can be, as an example, a heat exchanger for heat exchange between the effluent gas and any cooling fluid to cool the effluent gas. In addition to the condensate, there is a gas in the reflux tank 6c, which is mainly carbon dioxide. The top of the reflux tank 6c may be connected to one end of a line connected to a device that uses carbon dioxide, in the case of the first embodiment, for example, one end of a feedstock supply line 7 for supplying carbon dioxide as feedstock to a methanol producing plant.

The second distillation column 10 is not limited to a particular configuration as long as it is different from the first distillation column 2, but in the first embodiment, the second distillation column 10 is described as a distillation column for obtaining a fluid with a higher methanol concentration by distillation of a crude fluid mainly composed of methanol (hereinafter referred to as "crude methanol fluid") in a methanol producing plant. The second distillation column 10 communicates through a crude fluid supply line 16 with a device (not shown) for producing crude methanol fluid.

Similarly to the first distillation column 2, the second distillation column 10 is provided with a reboiler 11 for heating the crude methanol fluid in the second distillation column 10 and a condensing device 12 for condensing methanol vapor that flows out of the top of the second distillation column 10. The reboiler 11 is, for example, a heat exchanger for heat exchange between steam and the crude methanol fluid. The condensing device 12 includes, for example, a cooler 12a, which is a heat exchanger for heat exchange between the methanol vapor that flows out of the second distillation column 10 and any cooling fluid, a reflux tank 12b into which the fluid (mainly liquid methanol) cooled by the cooler 12a flows, a return line 12c for returning part of the liquid methanol in the reflux tank 12b to the second distillation column 10, and a methanol supply line 12d for supplying the remaining liquid methanol in the reflux tank 12b as a product.

One end of a line 13 through which the methanol vapor discharged from the second distillation column 10 flows is connected to the top of the second distillation column 10, and the other end of the line 13 is connected to the reflux tank 12b of the condensing device 12. The line 13 is designed to pass through the second reboiler 5b, i.e., to exchange heat between the absorption liquid flowing in the second line portion 4b and the methanol vapor flowing in the line 13 in the second reboiler 5b. Therefore, in the first embodiment, the above-described fluid is the methanol vapor that flows out of the top of the second distillation column 10. The line 13 is provided with a first compressor 14 between the second distillation column 10 and the second reboiler 5b, and a regulating valve 15 for regulating the pressure between the second reboiler 5b and the condensing device 12.

### <Operation of carbon dioxide recovery system according to first embodiment of present disclosure>

Next, the operation of the carbon dioxide recovery system 1 according to the first embodiment of the present disclosure will be described. The absorption liquid that has absorbed carbon dioxide flows into the first distillation column 2 through the absorption liquid supply line 3. The absorption liquid in the first distillation column 2 circulates so that it is extracted from the bottom of the first distillation column 2 and then returned into the first distillation column 2. During circulation of the absorption liquid, the absorption liquid flowing in the first line portion 4a and the second line portion 4b are heated in the first reboiler 5a and the second reboiler 5b, respectively.

When the temperature of the absorption liquid rises due to heating of the absorption liquid in each of the first reboiler 5a and the second reboiler 5b, carbon dioxide absorbed in the absorption liquid is removed from the absorption liquid. Carbon dioxide and other gas components removed from the absorption liquid rise in the first distillation column 2 and flow out of the top of the first distillation column 2, then flows through the effluent gas line 6a as the effluent gas. During flow of the effluent gas through the effluent gas line 6a, the effluent gas is cooled by the cooler 6b. When the effluent gas is cooled to a lower temperature, components with low boiling points in the effluent gas condense while most of carbon dioxide remains a gas. When the cooled effluent gas flows into the reflux tank 6c, the effluent gas is separated into gaseous and liquid components. The gaseous component, which is mainly carbon dioxide, is supplied as feedstock to a carbon dioxide consumption device (not shown) through the feedstock supply line 7. On the other hand, the liquid component is returned to the first distillation column 2 through the condensate line 6d.

Meanwhile, the crude methanol fluid that flows into the second distillation column 10 through the crude fluid supply line 16 is heated by the reboiler 11 to a higher temperature. When the temperature of the crude methanol fluid rises, most of methanol with low boiling point vaporizes and rises in the second distillation column 10, while most of components with high boiling points (mainly water) remain a liquid in the second distillation column 10. Vapor mainly composed of methanol (hereinafter referred to as "methanol vapor") that rises in the second distillation column 10 and flows out of the second distillation column 10 flows through the line 13.

The methanol vapor flowing through the line 13 is compressed by the first compressor 14. Compression by the first compressor 14 raises the temperature of the methanol vapor. The methanol vapor compressed by the first compressor 14 exchanges heat with the absorption liquid in the second reboiler 5b and lowers its temperature. Depending on the temperature, at least part of methanol can condense. The methanol vapor that has exchanged heat with the absorption liquid in the second reboiler 5b flows through the line 13 as methanol vapor or at least containing liquid methanol, and in the condensing device 12, it is cooled by the cooler 12a and then flows into the reflux tank 12b. Part of the condensate (liquid methanol) in the reflux tank 12b is returned to the second distillation column 10 through the return line 12c, while the remaining condensate is supplied to a device (not shown) for methanol consumption or storage through the methanol supply line 12d.

When the methanol vapor flowing through the line 13 is used as a heating medium, by compressing the heating medium to a higher temperature and using it for heat exchange in the second reboiler 5b, the latent heat of condensation can also be given to the absorption liquid. This allows the line 13 and the device associated with the line 13 to operate as a heat pump, which reduces the overall energy consumption of the carbon dioxide recovery system 1.

The characteristics of fluid in each device and each line of the carbon dioxide recovery system 1 and the energy consumed by each device were simulated under conditions where the amount of carbon dioxide recovered in the first distillation column 2 is 3 t/day, the amount of methanol supplied as a product from the second distillation column 10 is 2 t/day, and all methanol vapor that has exchanged heat with the absorption liquid in the second reboiler 5b condenses into liquid methanol. According to the simulation results, the amount of steam used in the first reboiler 5a can be reduced by 40 to 50% compared to the case where the absorption liquid is heated only in the first reboiler 5a.

Thus, in the first reboiler, the absorption liquid is heated by heat exchange between the absorption liquid and steam, and in the second reboiler, the absorption liquid is heated by heat exchange between the absorption liquid and the fluid that flows out of the second distillation column 10 after the fluid is compressed, so that the amount of steam used is reduced.

### (Second Embodiment)

Next, the carbon dioxide recovery system according to the second embodiment will be described. The carbon dioxide recovery system according to the second embodiment is modified from the first embodiment so that the fluid that has exchanged heat with the absorption liquid in the second reboiler 5b is used as a cooling fluid for cooling the effluent gas from the first distillation column 2 in the condensing device 6. In the second embodiment, the same constituent elements as those in the first embodiment are associated with the same reference signs and not described again in detail.

### <Configuration of carbon dioxide recovery system according to second embodiment of present disclosure>

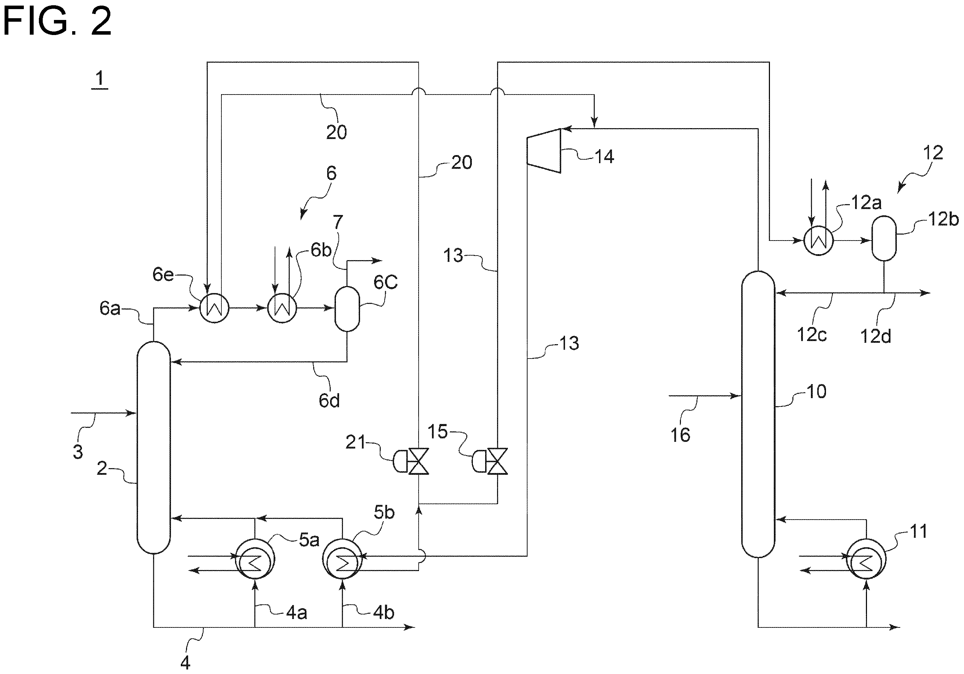

As shown in FIG. 2, in the carbon dioxide recovery system 1 according to the second embodiment, the condensing device 6 is provided with a cooler 6e disposed in the effluent gas line 6a upstream of the cooler 6b. The system is provided with a bypass line 20 connected at one end to the line 13 between the second reboiler 5b and the regulating valve 15 and connected at the other end to the line 13 between the first compressor 14 and the second distillation column 10. The bypass line 20 is configured to pass through the cooler 6e, i.e., to exchange heat between the effluent gas flowing in the effluent gas line 6a and a fluid flowing in the bypass line 20 in the cooler 6e. The bypass line 20 is provided with a regulating valve 21 for regulating the pressure between the second reboiler 5b and the cooler 6e. The configuration is otherwise the same as that of the first embodiment.

### <Operation of carbon dioxide recovery system according to second embodiment of present disclosure>

Next, the operation of the carbon dioxide recovery system 1 according to the second embodiment of the present disclosure will be described. The operation of removing carbon dioxide from the absorption liquid in the first distillation column 2 and the operation of generating methanol vapor from the crude methanol fluid in the second distillation column 10 are the same as in the first embodiment. In the second embodiment, the fluid that has exchanged heat with the absorption liquid in the second reboiler 5b becomes a fluid in the state of methanol vapor or at least partially condensed methanol and flows through the bypass line 20 into the cooler 6e. This fluid cools the effluent gas by exchanging heat with the effluent gas in the cooler 6e. If this fluid contains at least liquid methanol, the liquid methanol vaporizes through heat exchange with the effluent gas. The methanol vapor flowing out of the cooler 6e flows into the line 13 between the second distillation column 10 and the first compressor 14 through the bypass line 20, where it is mixed with the methanol vapor flowing in the line 13 and compressed by the first compressor 14. The operation is otherwise the same as that of the first embodiment.

Thus, since part of the fluid after heat exchange with the absorption liquid in the second reboiler 5b is used to cool the effluent gas from the first distillation column 2, the thermal efficiency of the entire carbon dioxide recovery system 1 can be improved. Further, since the cooling fluid after heat exchange with the effluent gas in the cooler 6e is supplied to the second reboiler 5b after it is mixed with the fluid from the top of the second distillation column 10 and compressed by the first compressor 14, the thermal efficiency of the entire carbon dioxide recovery system 1 can be improved.

In the second embodiment, as in the first embodiment, the characteristics of fluid in each device and each line of the carbon dioxide recovery system 1 and the energy consumed by each device were simulated under conditions where the amount of carbon dioxide recovered in the first distillation column 2 is 3 t/day, the amount of methanol supplied as a product from the second distillation column 10 is 2 t/day, all methanol vapor that has exchanged heat with the absorption liquid in the second reboiler 5b condenses into liquid methanol, and all liquid methanol that has exchanged heat with the effluent gas in the cooler 6e vaporizes. According to the simulation results, the amount of steam used in the first reboiler 5a can be reduced by 80 to 90% compared to the case where the absorption liquid is heated only in the first reboiler 5a.

### <Modified example of carbon dioxide recovery system according to second embodiment of present disclosure>

In the second embodiment, the condensing device 6 includes two coolers 6b and 6e, but it may include only the cooler 6e instead of the cooler 6b. Further, the number of coolers 6e is not limited to one, and multiple coolers 6e may be provided in series or in parallel with respect to the flow direction of the effluent gas.

### (Third Embodiment)

Next, the carbon dioxide recovery system according to the third embodiment will be described. The carbon dioxide recovery system according to the third embodiment is modified from the second embodiment so that a third reboiler 5c is provided for heating the absorption liquid in addition to the first reboiler 5a and the second reboiler 5b. In the third embodiment, the same constituent elements as those in the second embodiment are associated with the same reference numerals and not described again in detail.

### <Configuration of carbon dioxide recovery system according to third embodiment of present disclosure>

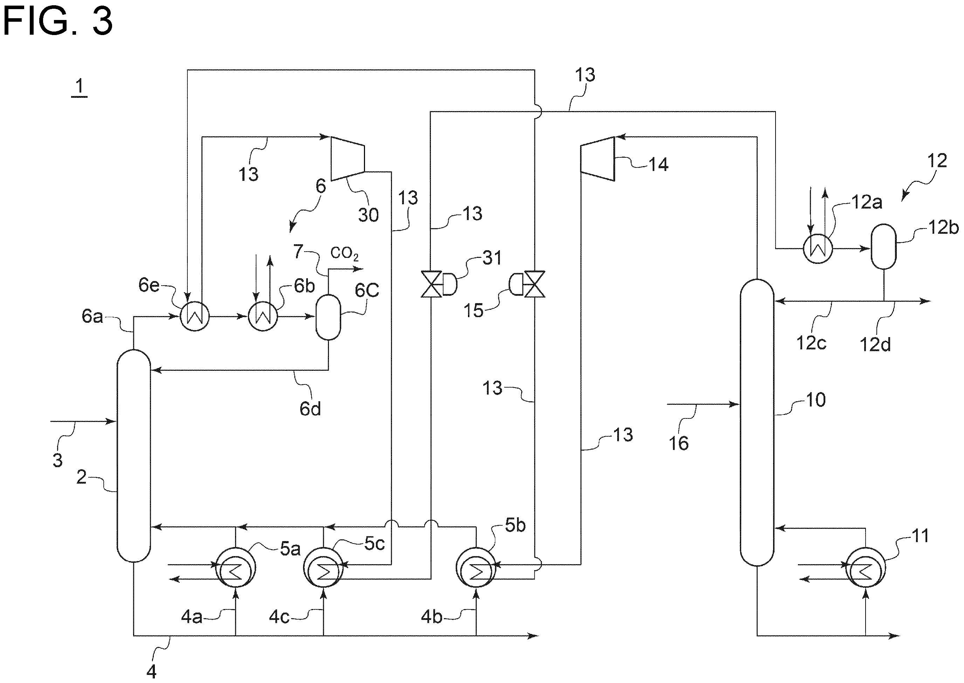

As shown in FIG. 3, in the carbon dioxide recovery system 1 according to the third embodiment, the circulation line 4 includes a third line portion 4c provided in parallel with each of the first line portion 4a and the second line portion 4b. The third line portion 4c is provided with a third reboiler 5c which exchanges heat between the absorption liquid flowing in the third line portion 4c and a second fluid to heat the absorption liquid. In other words, the third reboiler 5c is provided in parallel with each of the first reboiler 5a and the second reboiler 5b with respect to the flow direction of the absorption liquid. Illustrative examples of the second fluid in the third embodiment will be described later.

In the third embodiment, the bypass line 20 is not provided unlike the second embodiment. Instead, the line 13, one end of which is connected to the top of the second distillation column 10, is designed to pass through the second reboiler 5b, the cooler 6e, and then the third reboiler 5c, and the other end of the line 13 is connected to the reflux tank 12b of the condensing device 12. The line 13 is provided with a second compressor 30 between the cooler 6e and the third reboiler 5c, and a regulating valve 31 for regulating the pressure between the third reboiler 5c and the condensing device 12. The configuration is otherwise the same as that of the second embodiment.

### <Operation of carbon dioxide recovery system according to third embodiment of present disclosure>

Next, the operation of the carbon dioxide recovery system 1 according to the third embodiment of the present disclosure will be described. The operation of removing carbon dioxide from the absorption liquid in the first distillation column 2, the operation of generating methanol vapor from the crude methanol fluid in the second distillation column 10, and the operation of exchanging heat between the methanol vapor and the absorption liquid in the second reboiler 5b and exchanging heat between the methanol vapor and the effluent gas in the cooler 6e are the same as in the second embodiment. In the third embodiment, the methanol vapor after heat exchange with the effluent gas in the cooler 6e is compressed by the second compressor 30. Compression by the second compressor 30 raises the temperature of the methanol vapor. The methanol vapor compressed by the second compressor 30 exchanges heat with the absorption liquid in the third reboiler 5c as the second fluid and lowers its temperature. The second fluid after heat exchange with the absorption liquid in the third reboiler 5c is supplied to the condensing device 12. The operation of the condensing device 12 is the same as in the second embodiment.

In the third embodiment, as in the second embodiment, the characteristics of fluid in each device and each line of the carbon dioxide recovery system 1 and the energy consumed by each device were simulated under conditions where the amount of carbon dioxide recovered in the first distillation column 2 is 3 t/day, the amount of methanol supplied from the second distillation column 10 is 2 t/day, all methanol vapor that has exchanged heat with the absorption liquid in the second reboiler 5b condenses into liquid methanol, all liquid methanol that has exchanged heat with the effluent gas in the cooler 6e vaporizes, and all methanol vapor that has exchanged heat with the absorption liquid in the third reboiler 5c condenses into liquid methanol. According to the simulation results, the amount of steam used in the first reboiler 5a can be reduced by 80 to 90% compared to the case where the absorption liquid is heated only in the first reboiler 5a.

### (Fourth Embodiment)

Next, the carbon dioxide recovery system according to the fourth embodiment will be described. The carbon dioxide recovery system according to the fourth embodiment is modified from the first embodiment so that a third reboiler 5c is provided for heating the absorption liquid in addition to the first reboiler 5a and the second reboiler 5b. In the fourth embodiment, the same constituent elements as those in the first embodiment are associated with the same reference signs and not described again in detail.

### <Configuration of carbon dioxide recovery system according to fourth embodiment of present disclosure>

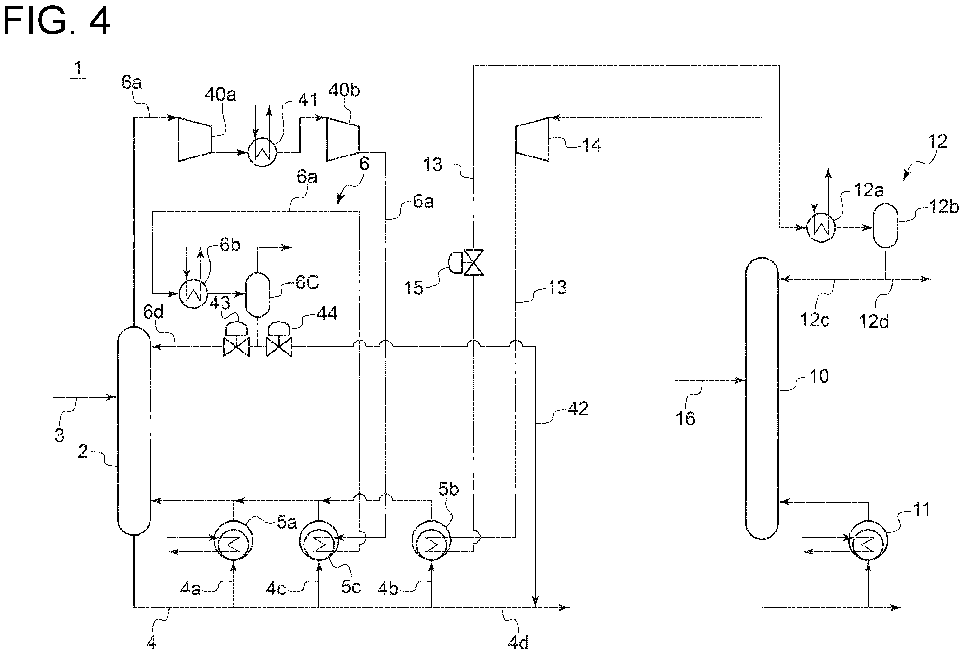

As shown in FIG. 4, the carbon dioxide recovery system 1 according to the fourth embodiment is equipped with a third reboiler 5c for heating the absorption liquid in the first distillation column 2 in addition to the first reboiler 5a and the second reboiler 5b as in the third embodiment. In the fourth embodiment, the effluent gas line 6a, one end of which is connected to the top of the first distillation column 2, passes through the third reboiler 5c, and the other end of the effluent gas line 6a is connected to the reflux tank 6c of the condensing device 6. The effluent gas line 6a is provided with two third compressors 40a and 40b in series with each other between the first distillation column 2 and the third reboiler 5c, and a heat exchanger 41 between the third compressors 40a and 40b for cooling the effluent gas by heat exchange between the effluent gas and any cooling fluid. The configuration is otherwise the same as that of the first embodiment.

Although not an essential component of the fourth embodiment, a condensate drain line 42 may be provided, which is connected at one end to the condensate line 6d and at the other end to a discharge line 4d, which is a branch of the circulation line 4 to discharge the absorption liquid out of the system. In this case, regulating valves 43 and 44 for regulating the flow rates may be provided in the condensate line 6d and the condensate drain line 42 in order to regulate the amount of condensate returned to the first distillation column 2 and the amount of condensate flowing in the condensate drain line 42, respectively.

### <Operation of carbon dioxide recovery system according to fourth embodiment of present disclosure>

Next, the operation of the carbon dioxide recovery system 1 according to the fourth embodiment of the present disclosure will be described. The operation of removing carbon dioxide from the absorption liquid in the first distillation column 2, the operation of generating methanol vapor from the crude methanol fluid in the second distillation column 10, and the operation of exchanging heat between the absorption liquid and the fluid, methanol vapor, in the second reboiler 5b and condensing the fluid that has exchanged heat with the absorption liquid by the condensing device 12 are the same as in the first embodiment. In the fourth embodiment, the effluent gas from the first distillation column 2 is compressed by each of the third compressors 40a and 40b while its temperature is adjusted by the heat exchanger 41 as it flows through the effluent gas line 6a. Compression by each of the third compressors 40a and 40b raises the temperature of the effluent gas. The effluent gas compressed by the third compressors 40a and 40b exchanges heat with the absorption liquid in the third reboiler 5c as the second fluid. The effluent gas that has exchanged heat with the absorption liquid in the third reboiler 5c is treated in the condensing device 6 by the same operation described in the first embodiment.

If the condensate drain line 42 is provided, part of the condensate can be discharged out of the system through the condensate drain line 42 and the discharge line 4d. When part of the condensate is discharged out of the system, the reflux flow rate of the first distillation column 2 decreases. Decreasing the reflux flow rate of the first distillation column 2 reduces the reboiler duty in the first distillation column 2. For example, according to simulations by the inventors of this disclosure, a 50% decrease in the reflux flow rate of the first distillation column 2 would reduce the reboiler duty in the first distillation column 2 by 10 to 20%.

In the fourth embodiment, as in the first embodiment, the characteristics of fluid in each device and each line of the carbon dioxide recovery system 1 and the energy consumed by each device were simulated under conditions where the amount of carbon dioxide recovered in the first distillation column 2 is 3 t/day, the amount of methanol supplied as a product from the second distillation column 10 is 2 t/day, and all methanol vapor that has exchanged heat with the absorption liquid in the second reboiler 5b condenses into liquid methanol. According to the simulation results, the amount of steam used in the first reboiler 5a can be reduced by 90 to 100% compared to the case where the absorption liquid is heated only in the first reboiler 5a.

### <Modified example of carbon dioxide recovery system according to fourth embodiment of present disclosure>

In the fourth embodiment, two third compressors 40a and 40b are provided to compress the effluent gas as the second fluid, but only one third compressor may be provided. However, by using a multi-stage compressor, the compression ratio per stage can be lowered to reduce power and improve efficiency. For this reason, the number of third compressors is not limited to two, but may be three or more. In the fourth embodiment, the heat exchanger 41 is disposed between the third compressors 40a and 40b, but any device that can cool the gas flowing out of each compressor can be used. Exemplary alternative means may include a pump configured to spray liquid into the line where the gas discharged from each compressor flows. The gas can be cooled by quenching with liquid sprayed from such a pump.

### <Modified example of carbon dioxide recovery system according to each embodiment>

In the first to fourth embodiments, the second distillation column 10 is a distillation column for refining methanol in a methanol producing plant, but it is not limited to such a distillation column, and may be a methanol-derived product producing device, such as devices for producing dimethyl carbonate from carbon dioxide and methanol, olefins from methanol (MTO), gasoline from methanol (MTG), etc. Methanol is not limited to that produced in a plant (product or intermediate), but may be externally procured as a raw material. In this case, instead of the second distillation column 10, which is a distillation column, methanol is supplied from, for example, a methanol storage facility and a heating device for heating methanol. In particular, if such a configuration is adopted in the second embodiment, all methanol after heat exchange with the absorption liquid in the second reboiler 5b may be used as the cooling fluid in the cooler 6e, and the methanol heated by heat exchange with the effluent gas in the cooler 6e may be supplied back to the second reboiler 5b for heat exchange with the absorption liquid. Furthermore, in the first to fourth embodiments, the second distillation column 10 is one distillation column, but the second distillation column 10 may consist of two or more distillation columns, or it may consist of a combination of one or more distillation columns and a device with a configuration other than a distillation column.

In the first to fourth embodiments, the fluid used as a heat source in the second reboiler 5b is methanol vapor, but it is not limited to methanol. Water, or a hydrocarbon with physical properties of saturation temperature lower than or equal to 100°C at atmospheric pressure and lower than or equal to 120°C at 10 atmospheres, or a hydrocarbon containing oxygen atoms may be used as the fluid. Further, the fluid is not limited to pure substances of such substances, but may contain such substances as part of the fluid. Examples of such substances include ethanol, acetone, 2-propanol, hexane, and mixtures thereof.

In the first to fourth embodiments, the first distillation column 2 and the second distillation column 10 are in the same plant (for example, methanol producing plant), but they may be in separate plants.

In the first and second embodiments, the first reboiler 5a and the second reboiler 5b are installed in parallel with each other with respect to the flow direction of the absorption liquid, and in the third and fourth embodiments, the third reboiler 5c is installed in parallel with each of the first reboiler 5a and the second reboiler 5b with respect to the flow direction of the absorption liquid, but the invention is not limited to these embodiments. The first reboiler 5a and the second reboiler 5b may be in series with each other, and the third reboiler 5c may be in series with at least one of the first reboiler 5a and the second reboiler 5b.

In the first to fourth embodiments and their modifications, the pressure of the second distillation column 10 may be higher than the pressure of the first distillation column 2. In this case, the compression ratio in the first compressor 14 can be lowered, so that the overall energy consumption of the carbon dioxide recovery system 1 can be reduced.

The contents described in the above embodiments would be understood as follows, for instance.
[1] A carbon dioxide recovery system according to one aspect is equipped with: a first distillation column (2) for heating an absorption liquid that has absorbed carbon dioxide to release carbon dioxide from the absorption liquid; a first reboiler (5a) for exchanging heat between the absorption liquid extracted from the first distillation column (2) and steam; a second reboiler (5b) for exchanging heat between the absorption liquid extracted from the first distillation column (2) and a fluid different from both an effluent gas from the first distillation column (2) and the steam; and a first compressor (14) for compressing the fluid before the fluid flows into the second reboiler (5b).
   With the carbon dioxide recovery system of the present disclosure, in the first reboiler, the absorption liquid is heated by heat exchange between the absorption liquid and steam, and in the second reboiler, the absorption liquid is heated by heat exchange between the absorption liquid and a fluid different from both the effluent gas from the first distillation column and the steam after the fluid is compressed, so that the amount of steam used is reduced, and the amount of external heat supply to the first distillation column can be reduced.
[2] A carbon dioxide recovery system according to another aspect is the carbon dioxide recovery system of [1], in which the fluid includes water, or a hydrocarbon with physical properties of saturation temperature lower than or equal to 100°C at atmospheric pressure and lower than or equal to 120°C at 10 atmospheres, or a hydrocarbon containing oxygen atoms.
[3] A carbon dioxide recovery system according to still another aspect is the carbon dioxide recovery system of [1] or [2], further including a second distillation column (10) different from the first distillation column (2). The fluid is supplied from the second distillation column (10).
   With this configuration, in the first reboiler, the absorption liquid is heated by heat exchange between the absorption liquid and steam, and in the second reboiler, the absorption liquid is heated by heat exchange between the absorption liquid and the fluid supplied from the second distillation column after the fluid is compressed, so that the amount of steam used is reduced, and the amount of external heat supply to the first distillation column can be reduced.
[4] A carbon dioxide recovery system according to sill another aspect is the carbon dioxide recovery system of [3], in which a pressure of the second distillation column (10) is higher than a pressure of the first distillation column (2).
   With this configuration, the compression ratio in the first compressor can be lowered, so that the overall energy consumption of the carbon dioxide recovery system can be reduced.
[5] A carbon dioxide recovery system according to still another aspect is the carbon dioxide recovery system of [3] or [4], including a condensing device (6) for returning a condensate obtained by cooling an effluent gas from the first distillation column (2) to the first distillation column (2). The condensing device (6) is provided with a cooler (6e) for cooling the effluent gas by exchanging heat between the effluent gas and a cooling fluid. The cooling fluid is at least part of the fluid after the fluid has exchanged heat with the absorption liquid in the second reboiler (5b).
   With this configuration, since at least part of the fluid after heat exchange with the absorption liquid in the second reboiler is used to cool the effluent gas from the first distillation column, the thermal efficiency of the entire carbon dioxide recovery system can be improved.
[6] A carbon dioxide recovery system according to sill another aspect is the carbon dioxide recovery system of [5], in which the carbon dioxide recovery system is configured such that the cooling fluid after exchanging heat between the cooling fluid and the effluent gas in the cooler (6e) is mixed with the fluid from the second distillation column (10) and compressed by the first compressor (14).
   With this configuration, since the cooling fluid after heat exchange with the effluent gas in the cooler is supplied to the second reboiler after it is mixed with the fluid from the second distillation column and compressed by the first compressor, the thermal efficiency of the entire carbon dioxide recovery system can be improved.
[7] A carbon dioxide recovery system according to sill another aspect is the carbon dioxide recovery system of [5], including a second third reboiler (5c) for exchanging heat between the absorption liquid extracted from the first distillation column (2) and a second fluid; and a second compressor (30) for compressing the cooling fluid after exchanging heat between the cooling fluid and the effluent gas in the cooler (6e). The second fluid is the cooling fluid after being compressed by the second compressor (30).
   With this configuration, since the third reboiler is provided for heating the absorption liquid by heat exchange between the absorption liquid and the second fluid, the cooling fluid compressed after heat exchange with the effluent gas in the cooler, the amount of steam used in the first reboiler is reduced, and the amount of external heat supply to the first distillation column can be further reduced.
[8] A carbon dioxide recovery system according to still another aspect is the carbon dioxide recovery system of [1] or [2], including a third reboiler (5c) for exchanging heat between the absorption liquid extracted from the first distillation column (2) and a second fluid; a third compressor (40a, 40b) for supplying a gas obtained by compressing an effluent gas from the first distillation column (2) to the third reboiler (5c) as the second fluid, and a condensing device (6) for returning at least part of a condensate obtained by cooling the second fluid after exchanging heat between the second fluid and the absorption liquid in the third reboiler (5c) to the first distillation column (2).
   With this configuration, since the third reboiler is provided for heating the absorption liquid by heat exchange between the absorption liquid and the second fluid, the gas obtained by compressing the effluent gas from the first distillation column, the amount of steam used in the first reboiler is reduced, and the amount of external heat supply to the first distillation column can be further reduced. Additionally, by returning part of the condensate to the distillation column while discharging the remaining condensate out of the system along with the drain of the absorption liquid extracted from the first distillation column, the amount of condensate returned to the first distillation column can be reduced, so that the amount of external heat supply to the first distillation column can be further reduced.
[9] A carbon dioxide recovery system according to sill another aspect is the carbon dioxide recovery system of any one of [1] to [8], in which the fluid is methanol.

### Reference Signs List

- 1: Carbon dioxide recovery system
- 2: First distillation column
- 5 a: First reboiler
- 5b: Second reboiler
- 5c: Third reboiler
- 6: Condensing device
- 6e: Cooler
- 10: Second distillation column
- 14: First compressor
- 30: Second compressor
- 40a: Third compressor
- 40b: Third compressor

## Claims

1. A carbon dioxide recovery system, comprising:
a first distillation column for heating an absorption liquid that has absorbed carbon dioxide to release carbon dioxide from the absorption liquid;
a first reboiler for exchanging heat between the absorption liquid extracted from the first distillation column and steam;
a second reboiler for exchanging heat between the absorption liquid extracted from the first distillation column and a fluid different from both an effluent gas from the first distillation column and the steam; and
a first compressor for compressing the fluid before the fluid flows into the second reboiler.

2. The carbon dioxide recovery system according to claim 1,
wherein the fluid includes water, or a hydrocarbon with physical properties of saturation temperature lower than or equal to 100°C at atmospheric pressure and lower than or equal to 120°C at 10 atmospheres, or a hydrocarbon containing oxygen atoms.

3. The carbon dioxide recovery system according to claim 1 or 2, further comprising a second distillation column different from the first distillation column,
wherein the fluid is supplied from the second distillation column.

4. The carbon dioxide recovery system according to claim 3,
wherein a pressure of the second distillation column is higher than a pressure of the first distillation column.

5. The carbon dioxide recovery system according to claim 3, comprising a condensing device for returning a condensate obtained by cooling an effluent gas from the first distillation column to the distillation column,
wherein the condensing device is provided with a cooler for cooling the effluent gas by exchanging heat between the effluent gas and a cooling fluid, and
wherein the cooling fluid is at least part of the fluid after the fluid has exchanged heat with the absorption liquid in the second reboiler.

6. The carbon dioxide recovery system according to claim 5,
wherein the carbon dioxide recovery system is configured such that the cooling fluid after exchanging heat between the cooling fluid and the effluent gas in the cooler is mixed with the fluid from the second distillation column and compressed by the first compressor.

7. The carbon dioxide recovery system according to claim 5, comprising:
a third reboiler for exchanging heat between the absorption liquid extracted from the first distillation column and a second fluid; and
a second compressor for compressing the cooling fluid after exchanging heat between the cooling fluid and the effluent gas in the cooler,
wherein the second fluid is the cooling fluid after being compressed by the second compressor.

8. The carbon dioxide recovery system according to claim 1 or 2, comprising:
a third reboiler for exchanging heat between the absorption liquid extracted from the first distillation column and a second fluid;
a third compressor for supplying a gas obtained by compressing an effluent gas from the first distillation column to the third reboiler as the second fluid, and
a condensing device for returning at least part of a condensate obtained by cooling the second fluid after exchanging heat between the second fluid and the absorption liquid in the third reboiler to the first distillation column.

9. The carbon dioxide recovery system according to claim 1 or 2,
wherein the fluid is methanol.
